# EUROPEAN PATENT APPLICATION

(11) **EP 4 794 366 A1**
(43) Date of publication of application: **19.08.2026**
(21) Application number: 25157408.3
(22) Date of filing: 12.02.2025
(51) Int. Cl.: H04W 12/06, H04W 12/122, H04W 12/79

(54) **RADIO FREQUENCY FINGERPRINT PROCESSING**

(71) Applicant: Cujo LLC, Covina, CA 91723 (US)
(72) Inventor: Kovelman, Gregory, 6473118 Tel Aviv (IL); Mosseri, Idan, 6473118 Tel Aviv (IL)
(74) Representative: TBK

(57) **Abstract**

A first radio frequency fingerprint is generated (116) based on a first communication protocol data transmission to an access point. A second radio frequency fingerprint is generated (122) based on a second communication protocol data transmission. The second communication protocol data transmission uses a different communication protocol than the first communication protocol data transmission. In response to finding (132) a match between the first radio frequency fingerprint and the second radio frequency fingerprint, a single connected device is detected (136) as a transmitter of both the first communication protocol data transmission and the second communication protocol data transmission.

## Description

### FIELD

The invention relates to a method, apparatus, computer program product, and computer-readable medium.

### BACKGROUND

Device identification is a capability to detect and identify a connected device in a home, office, or public wireless local area network (WLAN) provided by an access point such as a customer-premises equipment (CPE). Traditionally, the Media (or Medium) Access Control (MAC) address is assigned by a device manufacturer and used in the wireless connection within the WLAN for the device identification. But obfuscation techniques, such as MAC randomization, which anonymize and randomize the MAC address to increase privacy, complicate the device identification. Device identification may be aided with radio frequency fingerprinting, which is a technique used to identify connected devices based on their unique radio signal characteristics. Slight variations between radio signals of different connected devices are caused by differences in hardware components of the connected devices, thereby creating a unique radio frequency fingerprint for each connected device. Further sophistication of the radio frequency fingerprinting is desirable.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1 is a flowchart illustrating examples of a method;
FIG. 2 is a block diagram illustrating an example implementation environment for the method;
FIG. 3A is a simplified block diagram illustrating an Orthogonal Frequency Division Multiple Access (OFDMA) transmitter and a Differential Phase Shift Keying (DPSK) transmitter, and FIG. 3B is a block diagram illustrating an example of a wireless transceiver chip;
FIG. 4A and FIG. 4B are block diagrams illustrating examples of a cybersecurity apparatus;
FIG. 5 is a block diagram illustrating an example of a connected device;
FIG. 6 is a block diagram illustrating an example of a computing resource;
FIG. 7A and FIG. 7B are block diagrams illustrating examples of a customer-premises equipment; and
FIG. 8 is a flowchart illustrating training and use of a machine learning model to implement the method.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

In general, machine learning (ML) is used to overcome the obfuscation techniques. To perform the device identification using machine learning algorithms and device fingerprinting, a wireless connection from a connected device may be monitored. The monitored wireless connection may be analyzed to perform radio frequency fingerprinting enabling the device identification. The following method provides a way to perform the device identification across various different communication protocols based on the radio frequency fingerprinting.

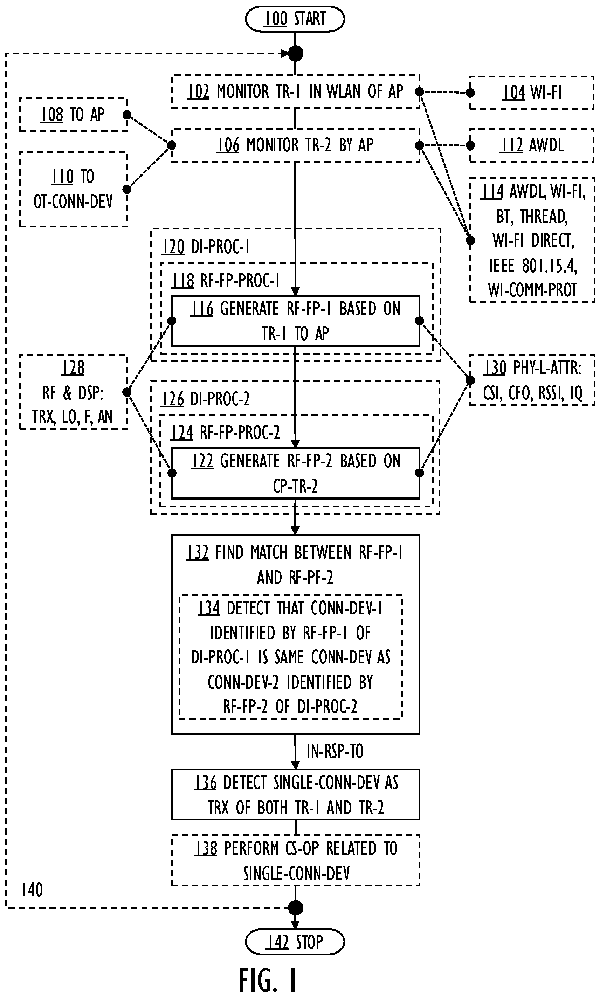

FIG. 1 is a flowchart illustrating examples of a method. The method performs operations related to the radio frequency fingerprinting.

The method starts in 100 and ends in 142. The method may run in principle endlessly. The infinite running may be achieved by looping 140 back as shown in FIG. 1.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

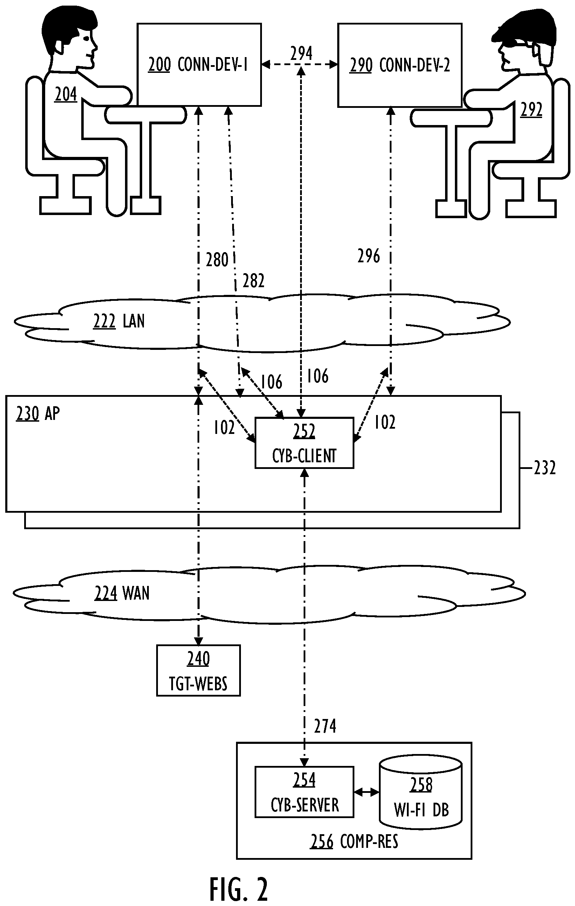

FIG. 2 is a block diagram illustrating an example implementation environment for the method. The method may be a computer-implemented method. The method may operate within an access point 230, but optionally also partly within a computing resource 256.

A first radio frequency fingerprint is generated 116 based on a first communication protocol data transmission 280 to an access point 230.

In an example, prior to generating 116 the first radio frequency fingerprint based on the first communication protocol data transmission 280 to the access point 230, the first communication protocol data transmission 280 is monitored 102 in a wireless local area network (WLAN) 222 of the access point 230. As shown in FIG. 2, the first communication protocol data transmission 280 is from a connected device 200 to the access point 230.

A second radio frequency fingerprint is generated 122 based on a second communication protocol data transmission 294/282. The second communication protocol data transmission 294/282 uses a different communication protocol than the first communication protocol data transmission 280. As shown in FIG. 2, the second communication protocol data transmission is 294/282 is from the connected device 200 to another connected device 290, or to the access point 230.

In an example, prior to generating 122 the second radio frequency fingerprint based on the second communication protocol data transmission 294/282, the second communication protocol data transmission 294/282 is monitored 106 by the access point 230.

In an example, the first radio frequency fingerprint is based on one or more physical layer (or Layer 1) attributes 130 of the first communication protocol data transmission 280, and the second radio frequency fingerprint is based on one or more physical layer attributes 130 of the second communication protocol data transmission 294/282. The physical layer attributes (130) may comprise one or more of a channel state information (CSI), a carrier frequency offset (CFO), a received signal strength indicator (RSSI), and in-phase (I) and quadrature (Q) components. The physical layer attributes may be the same, but naturally each of the first communication protocol data transmission 280 and the second communication protocol data transmission 294/282 have their own values for these attributes.

CSI defines the known channel properties of a communication link. CSI describes the way a signal propagates from the transmitter to the receiver and represents the combined effect of scattering, fading, and power decay with distance, for example. CSI is gathered from each packet of the wireless data communication and is used for a channel estimation, which makes it possible to adapt transmissions to current channel conditions, which is crucial for achieving reliable communication with high data rates in multiantenna systems.

RSSI is a result of a measurement of the power present in a received radio signal.

The monitoring processes 102, 106 may be implemented so that wireless data transmissions 280, 294/282 from the connected device 200 are monitored 102, 106 by the access point 230.

In the example of FIG. 2, the access point performing the monitoring 106 of the second communication protocol data transmission 294 is the same access point 230 that is performing the monitoring 102 of the first communication protocol data transmission 280. But the two monitoring processes 102, 106 may also be performed by two different access points 230, 232. Also note that even though the two monitoring processes 102, 106 may be performed simultaneously or partly overlapping, they may also be performed successively or separated by a time period in-between.

In an example illustrated in FIG. 2, the second communication protocol data transmission 294 is addressed 110 to the other (second) connected device 290 located within a range of the access point 230. As shown, the (first) connected device 200 may be used by a first user 204, and the other (second) connected device 290 may be used by a second user 292. The other (second) connected device 290 may also perform a first communication protocol data transmission 296 to the access point 230 so as to be able to gain access to the communication resources of the access point 230.

In an example, the first communication protocol data transmission 280 uses a Wi-Fi^{®} protocol 104, and the second communication protocol data transmission 294 uses an Apple^{®} wireless direct link (AWDL) protocol 112.

The connected device 200 may support various Wi-Fi standards, including, but not being limited to The Institute of Electrical and Electronics Engineers (IEEE^{®}) 802.11a/b/g/n/ac/ax (Wi-Fi 6), Wi-Fi 6E and Wi-Fi 7. These standards determine the speed, range, and frequency bands (2.4 GHz, 5 GHz, and 6 GHz) for the first communication protocol data transmission 280.

AWDL is a proprietary wireless communication protocol developed by Apple^{®}. As shown in FIG. 2, AWDL enables direct peer-to-peer connections between connected device 200, 290. Using the second communication protocol data transmission 294 with AWDL seamless communication between the connected devices enables 200, 290 enables features like AirDrop^{®} (share files, photos, videos, websites, map locations, etc. between the connected devices 200, 290), AirPlay^{®} (stream audio, video, and photos between the connected devices 200, 290), and Continuity^{®} (seamless integration and interaction between the connected devices 200, 290, such as handoff, universal clipboard, continuity camera, instant hotspot, cellular calls, auto unlock, etc.).

AWDL creates a mesh network wherein connected devices 200, 290 announce their availability. AWDL uses Wi-Fi channels to establish direct connections between the connected devices 200, 290. Connected devices 200, 290 may switch between AWDL and Wi-Fi networks as needed, optimizing performance and energy efficiency.

In an alternative example, the second communication protocol data transmission may also be addressed 108 to the access point 230. In such a case, the connected device 200 is either having two simultaneous connections to the access points 230 or two successive connections to the access point 230, but in both cases the two connections use different communication protocols (or different frequency bandwidths) to realize the first communication protocol data transmission and the second communication protocol data transmission. In an example, the two simultaneous connections or the two successive connection may be besides the (first) access point also to another (second) access point 232.

In an example, the first communication protocol data transmission 280 and the second communication protocol data transmission 294/282 are selected from a group 114 comprising the AWDL protocol, a Wi-Fi^{®} protocol, a Bluetooth^{®} protocol, a Thread^{®} protocol, a Wi-Fi ^{®}Direct protocol, an IEEE 802.15.4 protocol, and another wireless communications protocol.

After generating 116 the first radio frequency fingerprint, and generating 122 the second radio frequency fingerprint, an analysis is performed regarding a match between the first radio frequency fingerprint and the second radio frequency fingerprint. In response to finding 132 a match between the first radio frequency fingerprint and the second radio frequency fingerprint, a single connected device 200 is detected 136 as a transmitter of both the first communication protocol data transmission 280 and the second communication protocol data transmission 294/282.

In an example, generating 116 the first radio frequency fingerprint based on the first communication protocol data transmission to the access point is performed by a first radio frequency fingerprinting process 118 of a first device identification process 120, and generating 122 the second radio frequency fingerprint based on the second communication protocol data transmission is performed by a second radio frequency fingerprinting process 124 of a second device identification process 126. Furthermore, finding 132 the match between the first radio frequency fingerprint and the second radio frequency fingerprint further comprises detecting 134 that a first connected device 200 identified by the first radio frequency fingerprint of the first device identification process 120 is a same connected device as a second connected device 200 identified by the second radio frequency fingerprint of the second device identification process 126.

In an example, a cybersecurity operation related to the single connected device 200 is performed 138. The cybersecurity operation may include, but is not limited to blocking of the first communication protocol data transmission 280, and/or blocking of the second communication protocol data transmission 294/282.

As used herein, the term "connected device" 200, 290 refers to a physical device with communication capabilities.

As used herein, the term "access point" 230, 232 refers to a physical device providing the local area network 222 for the connected device 200 and an access for the connected device 200 to a wide area network (WAN) 224 such as the Internet.

The first communication protocol data transmission 280, 282 is transferred over a wireless connection between the connected device 200 and the access point 230. The connection is first established between the connected device 200 and the access point 230. Next, the connection may extend from the connected device 200 via the LAN 222 and WAN 224 to a target website 240 using a Hypertext Transfer Protocol/Hypertext Transfer Protocol Secure (HTTP/HTTPS) connection. The establishment of the HTTP/HTTPS connection may also require a wireless data transmission with a domain name system (DNS) server (not illustrated in FIG. 2).

The second communication protocol data transmission 294 may be realized between two different connected devices 200, 290 as explained earlier, using the AWDL protocol, for example.

In an example, the WLAN 222 may be implemented by a customer-premises equipment (CPE) acting as the access point 230. The CPE 230 may implement the WLAN 222 between the connected device 200 and the CPE 230. The CPE 230 also provides an access to the WAN 224. In the wireless connection, data packets may be transferred from and to the connected device 200. In an example, the CPE 230 is configured to generate a wireless non-cellular internet access network 222 as the WLAN. The CPE 230 may be configured to operate at a home or an office of a user 204 of the connected device 200. But the access point 230 may also be configured to operate out of the home or the office of the user 204 as a hotspot serving the connected devices 200 in a public place such as a cafe, city center, shopping mall, airport, an arena, etc.

Next, let us study how a cybersecurity operator is capable of monitoring 102, 106 the first communication protocol data transmission 280, and the second communication protocol data transmission 294/282.

A website access application (not illustrated in FIG. 2) running in the connected device 200 may seek to establish a connection to a target website 240, for example. As shown in FIG. 2, the connection between the connected device 200 and the access point 30 is routed through an access of the WAN 224 to the target website 240 to implement the first communication protocol data transmission 280.

Monitoring 102 the first communication protocol data transmission 280 and the second communication protocol data transmission 282 between the connected device 200 and the access point 230 may be implemented by monitoring these wireless data transmissions 280, 282 in the WLAN 222 implemented by the CPE as the access point 230.

The connected devices 200 (such as user devices or Internet of Things (IoT) devices) use websites for various operations. The user 204 of the (user) connected device 200 may use a browser to browse webpages of a website 240, to view media content provided on the webpages, for example. The (IoT) connected device 200 may upload sensor data gathered by one or more sensors onboard the connected device 200 to the website 240, for example. The connected device 200 may download a software update from the website 240, for example. Numerous other well-known operations related to the websites 240 may also be performed by the connected device 200.

The connected device 200 may be configured to execute the website access application, such as web user interface application (a web browser, for example), or a stand-alone application (a mobile app, for example), and as a result, the first communication protocol data transmission 280 from the connected device 200 to the accessed website 240 via the WLAN 222 and the WAN 224 is performed. The website access application may automatically cause the first communication protocol data transmission 280, or, alternatively, the first communication protocol data transmission 280 may be generated as a result of an action by the user 204 through user interface controls of the website access application.

The connected device 200 may create the wireless connection using a packet protocol from the website access application of the connected device 200 to the target website 240. The target website 240 may host a server application enabling access by the website access application. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the first communication protocol data transmission 280 (using TCP streams or UDP datagrams, for example). In the Internet Protocol suite, the first communication protocol data transmission 280 is operated in a link layer, an internet layer, and a transport layer, and the requests transmitted in the first communication protocol data transmission 280 are operated in an application layer.

The monitoring 106 of the second communication protocol data transmission 294 between the two connected devices 200, 290 may be implemented by the access point 230 that is configured to eavesdrop the wireless data communication 294 from the connected device 200 that is not addressed to the access point 230.

As used herein, the term "monitoring" refers to user-approved lawful interception or monitoring of the wireless data transmissions 280, 282, 294 with a purpose and goal of increasing cybersecurity related to the connected device 200 and its operating environment. As the radio signal of the wireless data transmission 280, 282, 294 is monitored, the wireless data transmission 280, 282, 294 is accessed and collected between the transmitting device and the receiving device. The wireless data transmission 280, 282, 294 may be monitored even if the digital data transmission units (such as messages) of the wireless data transmission 280, 282, 294 are addressed to the receiving device (such as the access point 230, the target website 240, or the other connected device 290). The monitoring may be implemented so that the wireless data transmission 280, 282, 294 is passively monitored, i.e., the wireless data transmission 280, 282, 294 is not affected by the monitoring. Alternatively, if needed, the monitoring may include a seizing of the wireless data transmission 280, 282, 294, i.e., the wireless data transmission 280, 282, 294 is actively influenced so that a connection and/or requests and/or responses are blocked until it may be decided whether a cybersecurity action (such as blocking of the wireless data transmission 280, 282, 294) is required.

As used herein, the terms "first communication protocol data transmission" and "second communication protocol data transmission", or "wireless data transmission" in general, refers to the transmission and/or reception of (digital) data between the connected device 200 and the access point 230, or between two connected devices 200, 290. The wireless data transmission 280, 282, 294 is transferred using digital data transmission units over a communication medium such as one or more communication channels between the connected device 200 and another network node such as the access point 230, the target website 240, or the other (second) connected device 290. Besides over radio interface in the WLAN 222, the data may be conveyed over another transmission medium (implemented by copper wires, or optical fibers, for example) in the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes 230, 232, 290 to implement the successful and reliable wireless data transmission 280, 282, 294. The communication protocols may implement a protocol stack with different conceptual protocol layers. Note that the radio frequency fingerprinting is performed on the radio signal transmitted from the connected device 200.

The wireless data transmission 280, 282, 294 may be monitored 102, 106 by a cybersecurity client 252 operating in the access point 230, 232. The wireless data transmission 280, 282, 294 may be accessed and collected by the cybersecurity client 252. The cybersecurity client 252 may also access a data structure related to the wireless data transmission 280, 282 established and maintained at the CPE 230 after a successful handshake sequence between the connected device 200 and the CPE 230. The monitored wireless data transmission 280, 282, 294 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected device 200 and its communication) to enable the device identification.

The WAN such as the Internet 224 uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

As described earlier, the method enables the device identification of the connected device 200 across various different communication protocols based on the radio frequency fingerprinting.

Various aspects of the radio frequency fingerprinting are described in the following patent publications, incorporated herein by reference in all jurisdictions where applicable: US 10,594,727 B2, US 10,693,576 B2, US 10,742,461 B2, US 10,749,898 B2, and US 2022/0399920 A1.

Slight variations between radio signals of different connected devices are caused by differences in hardware components of the connected devices, thereby creating a unique radio frequency fingerprint for each connected device. The hardware components processing the radio frequency signal in the transmitter of a connected device have minute imperfections within manufacturing and operating tolerances, which cause unique characteristics into the transmitted radio signal.

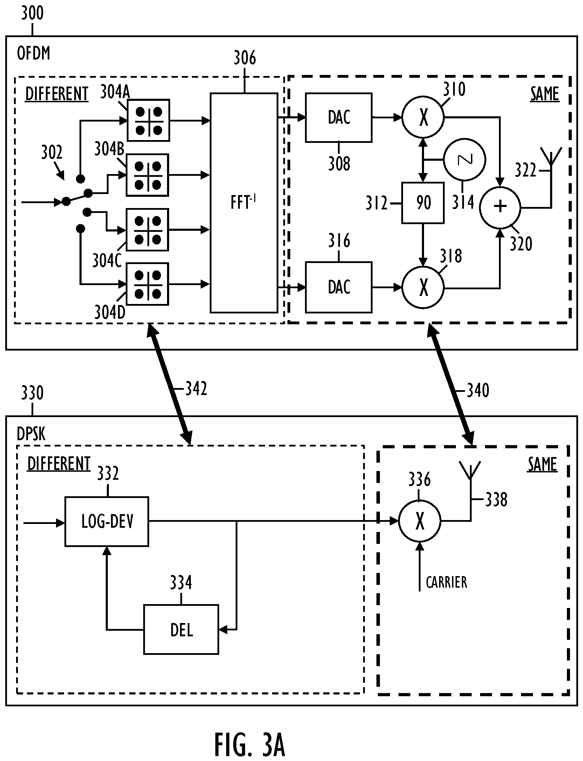

FIG. 3A is a simplified block diagram illustrating an Orthogonal Frequency Division Multiplexing (OFDM) transmitter 300 and a Differential Phase Shift Keying (DPSK) transmitter 330.

Orthogonal Frequency Division Multiple Access (OFDMA) is a multiuser version of OFDM allowing multiple users to share the same frequency band by assigning subsets of subcarriers to individual users. OFDMA is used in Wi-Fi, Long Term Evolution (LTE) and 5G networks, and AWDL, for example.

The incoming serial data stream is divided into multiple parallel data streams by a serial-to-parallel converted 302.

Each parallel data stream is mapped to Quadrature Amplitude Modulation (QAM) symbols by a symbol mapper 304A, 304B, 304C, 304D. In QAM, data is represented by varying both the amplitude and phase of the carrier signal. For example, in 16-QAM, each symbol represents 4 bits of data, with 16 possible combinations of amplitude and phase.

An Inverse Fast Fourier Transform (IFFT) block 306 converts the QAM symbols from the frequency domain into time domain, thus generating the OFDM signal.

The digital OFDM signal is converted into an analog signal using digital-to-analog converters (DAC) 308, 316.

The analog signal divided into I (in-phase)- and Q (quadrature)-components is up-converted to a desired radio frequency signal using a pair of mixers 310, 318, a local oscillator 314, a 90-degree phase shifter 312 and an adder 320 into a radio frequency signal. This involves multiplying the baseband signal with a carrier frequency to shift it to the appropriate radio frequency band for transmission.

Finally, the RF signal is amplified and transmitted through an antenna 322. The transmitted signal consists of multiple orthogonal subcarriers, each carrying a portion of the original data.

As was explained earlier, the first radio frequency fingerprint may be based on the carrier frequency offset (CFO).

Carrier frequency offset (CFO) is a phenomenon caused by a frequency difference between a frequency generated by the local oscillator 314 in the transmitter of the connected device 200, and a frequency generated by a local oscillator in a receiver of the access point 230. The frequency difference causes that the local oscillator signal for down-conversion in the receiver does not synchronize with the carrier signal contained in the received signal. Besides the frequency mismatch, the Doppler effect may also cause the carrier frequency offset as the connected device 200 with the transmitter is moving, whereas the access point 230 with the receiver is stationary. The carrier frequency offset causes that the received radio signal is shifted in frequency. In an orthogonal frequency-division multiplexing (OFDM) radio system, the carrier frequency offset must be kept within certain limits so that the orthogonality among sub-carriers can be maintained. Otherwise, inter-carrier interference (ICI) may be caused into the radio signal. In practice, the local oscillators 314 never oscillate at exactly the same frequency. Telecommunication system standards usually set a requirement for the precision of the local oscillator 314. In the IEEE 802.11 standard for wireless local area network (WLAN), the local oscillator precision tolerance is specified as less than ±20 parts per million (ppm), whereby the resulting carrier frequency offset caused by frequency difference is in the range from -40 ppm to +40 ppm. If the carrier frequency is 2.4 GHz, for example, then the local oscillator tolerance is ±48 kHz, and the maximum carrier frequency offset ±96 kHz. In comparison, the Doppler effect is in the magnitude of hundreds of hertz, i.e., much less than the oscillator generated mismatch. The local oscillator 314 may provide a single reference frequency to a frequency synthesizer (not illustrated in FIG. 3A).

Besides the carrier frequency offset, radio frequency and analog parts of the radio transmitter in the connected device 200 and radio frequency and analog parts in the radio receiver in the access point 230 may cause other distortions into the present radio signal, including, but not being limited to: a sampling clock offset (= a difference in a sampling clock frequency between the transmitter and the receiver), an IQ imbalance (= a phase difference and a gain difference between an in-phase signal path and a quadrature signal path in the transmitter), and a phase noise (= noise spectrum at either side of the radio signal as a result of a phase jitter in a timing accuracy of the local oscillator).

In the DPSK transmitter 330, a local oscillator is typically not required. Unlike other phase modulation techniques, DPSK does not need a reference oscillator because it encodes data based on the phase difference between consecutive symbols rather than an absolute phase reference. DPSK is used in Bluetooth, for example.

The serial data input is fed into one input of a logic device 332. The output of the logic device 332 is again fed back to another input of the logic device 332 through a delay 334. In an example, the logic device 332 is an exclusive NOR (XNOR) gate. In an example, the delay 334 is a 1-bit delay. The output of the logic device 332 is fed along with a carrier signal to a balance demodulator 336 to produce the DPSK signal, which is then amplified and transmitted through an antenna 338.

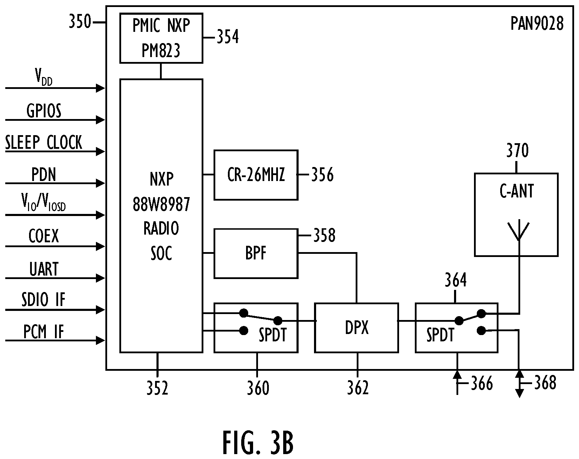

FIG. 3B illustrates an example of a wireless transceiver chip, a Panasonic PAN9028 Wi-Fi and Bluetooth radio module 350.

The radio module 350 comprises an NXP^{®} 88W8987 wireless system-on-chip (SoC) 352 designed for dual-band Wi-Fi and Bluetooth applications, and an optional NXP^{®} PM823 power management integrated circuit (PMIC) 354.

The NXP^{®} 88W8987 SoC 352 supports IEEE 802.11ac (Wave 2) for high-speed Wi-Fi connectivity, operating in both 2.4 GHz and 5 GHz bands, and Bluetooth 5.2, including Bluetooth Low Energy (BLE) 5.1.

A 26 MHz crystal module 356 is a local oscillator providing a frequency reference for the Wi-Fi and Bluetooth functionalities.

A band-pass filter (BPF) module 358 allows signals within a certain frequency range to pass through while attenuating signals outside that range, thereby reducing interference and improving signal quality.

A first single pole double throw (SPDT) switch 360 manages signal paths so that the radio module 350 is able to handle dual-band Wi-Fi (2.4 GHz and 5 GHz) and Bluetooth operations simultaneously without interference.

A diplexer (DPX) module 362 allows two different frequency bands (2.4 GHz and 5 GHz) to share a common antenna while keeping the signals separate, thereby ensuring that the 2.4 GHz and 5 GHz signals do not interfere with each other while using the same antenna.

A second SPDT switch 364 switches between two different antennas, an external antenna (not illustrated in FIG. 3B) connected via a surface-mount device (SMD) pad 368, and a surface-mount chip antenna 370. The second SPDT switch 364 is controlled via a radio frequency switch 366 to switch between the different antennas.

In an example, the first communication protocol data transmission 280 and the second communication protocol data transmission 294/282 originate from same radio frequency and digital signal processing components 128 of the single connected device 200.

For example, the radio module 350 of FIG. 3B uses the same radio frequency and digital signal processing components 352, 356, 360, 362, 364, 368, 370 for both Wi-Fi and AWDL protocol, or for both Wi-Fi and Bluetooth protocol. In this way, the first communication protocol data transmission 280 using the Wi-Fi protocol, and the second communication protocol data transmission 294 using the AWDL protocol may originate from the same radio frequency and digital signal processing components 352, 356, 360, 362, 364, 368, 370.

Or the first communication protocol data transmission 280 using the Wi-Fi protocol, and the second communication protocol data transmission 294 using the Bluetooth protocol may originate from the same radio frequency and digital signal processing components 352, 356, 360, 362, 364, 368, 370. An example is shown in FIG. 3A, wherein the same parts between the OFDM transmitter 300 and the DPSK transmitter are shown with an arrow 340, and different parts with an arrow 342.

In an example, the same radio frequency and digital signal processing components 128 of the single connected device 200 comprise a wireless transceiver chip, such as the radio module 350.

In an example, the same radio frequency and digital signal processing components 128 of the single connected device 200 comprise one or more of a local oscillator, one or more filters, and an antenna. An example is the radio module 350 shown in FIG. 3B.

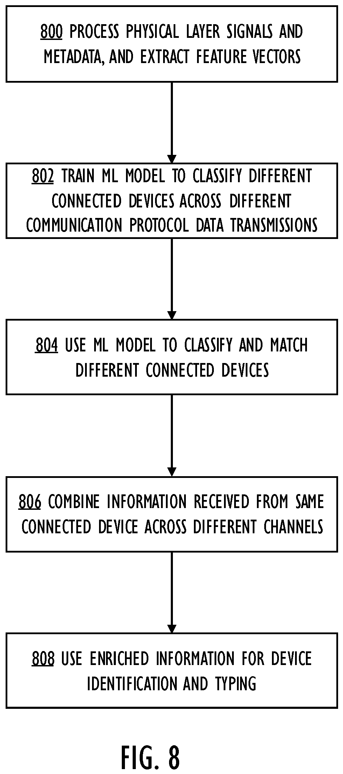

FIG. 8 is a flowchart illustrating training and use of a machine learning model to implement the method.

The machine learning (ML) model may be implemented as a neural network. Machine learning with classification in neural networks involves training a machine learning model to categorize input data into predefined classes. Besides machine learning, deep learning (DL) may be used. Deep Learning is a subset of machine learning that uses neural networks with multiple layers ("deep") to analyze and learn.

The physical layer signals containing various protocol data transmissions are obtained. This may be performed by real-time monitoring, or by processing recorded network traffic.

The physical layer signals and their metadata is processed, and feature vectors are extracted 800.

Next, the machine learning (ML) model is trained 802 to classify different connected devices across different communication protocol data transmissions.

After the training phase in operations 800, 802, the machine learning model is used to classify and match 804 different connected devices. Information received from the same connected device is combined 806 across different channels, and the enriched information is used 808 for the device identification and typing. The operations 804, 806, 808 correspond with the method/algorithm described with reference to FIG. 1.

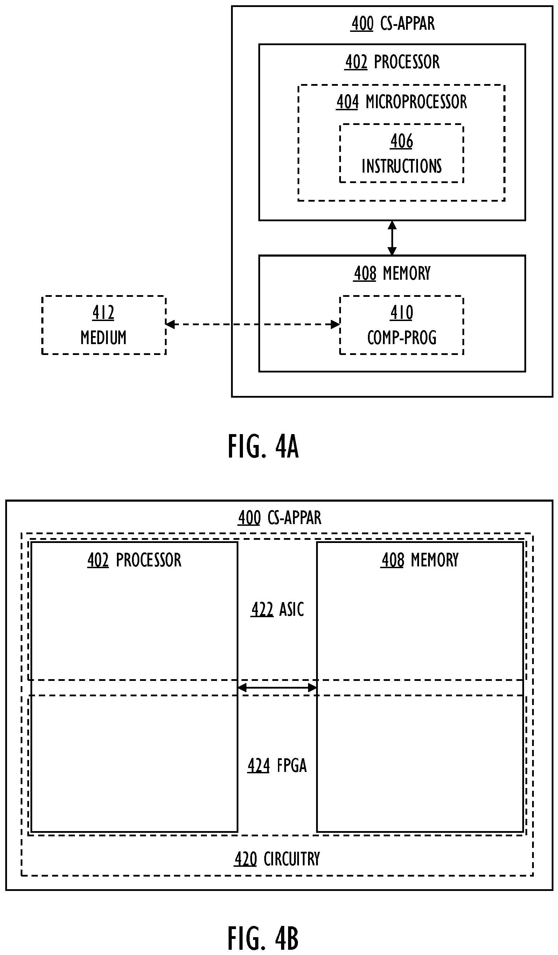

FIG. 4A and FIG. 4B are block diagrams illustrating examples of a cybersecurity apparatus 400. The method described with reference to FIG. 1 may be implemented by the cybersecurity apparatus 400. The apparatus 400 may execute the operations defined in the method. The apparatus 400 may implement an algorithm, which includes the operations of the method, but may optionally include other operations related to the cybersecurity in general. Note that the method described with reference to FIG. 1 may be implemented as a part of the cybersecurity client 252 running in the CPE 230 (or access point) as shown in FIG. 2. As shown in FIG. 2, the cybersecurity apparatus 400 may comprise various distributed actors 252, 254 communicatively coupled 274 with each other.

The cybersecurity apparatus 400 comprises one or more memories 408, and one or more processors 402 coupled to the one or more memories 408 configured to execute the operations described in FIG. 1.

The term "processor" 402 refers to a device that is capable of processing data. The term "memory" 408 refers to a device that is capable of storing data run-time (= working memory) or permanently (= non-volatile memory).

As shown in FIG. 4A, the one or more processors 402 may be implemented as one or more microprocessors 404, which are configured to execute instructions 406 of a computer program 410 stored on the one or memories 408. The microprocessor 404 implements functions of a central processing unit (CPU) on an integrated circuit. The CPU is a logic machine executing the instructions 406 of the computer program 410. The CPU may comprise a set of registers, an arithmetic logic unit (ALU), and a control unit (CU). The control unit is controlled by a sequence of the instructions 406 transferred to the CPU from the (working) memory 408. The control unit may contain a number of microinstructions for basic operations. The implementation of the microinstructions may vary, depending on the CPU design. The one or more microprocessors 404 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 504 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 410 may be written ("coded") by a suitable programming language, and the resulting executable code may be stored in the memory 408 and executed by the one or more microprocessors 404.

The computer program 410 implements the method/algorithm. The computer program 410 may be coded using a programming language, which may be a high-level programming language, such as Go, Java, C, or C++, or with a low-level programming language, such as an assembler or a machine language. The computer program 410 may be in source code form, object code form, executable file, or in some intermediate form, but for use in the one or more microprocessors 404 it is in an executable form as an application. There are many ways to structure the computer program 410: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 410 for performing a wide variety of standard operations. In addition, an operating system (such as a general-purpose operating system) may provide the computer program 410 with system services.

As shown in FIG. 4A, a computer-readable medium 412 may store the computer program 410, which, when executed by the apparatus 400 (the computer program 410 may first be loaded into the one or more microprocessors 404 as the instructions 406 and then executed by one or more microprocessors 404), causes the apparatus 400 (or the one or more microprocessors 404) to carry out the method/algorithm. The computer-readable medium 412 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 410 to the one or memories 408 of the apparatus 400. In some jurisdictions, depending on the legislation and the patent practice, the computer-readable medium 412 may not be the wired or wireless telecommunications signal. The computer program 410 may be implemented as a computer program product comprising instructions which, when executed by the apparatus 400, cause the apparatus 400 to carry out the method.

As shown in FIG. 4B, the one or more processors 402 and the one or more memories 408 may be implemented by a circuitry 420. A non-exhaustive list of implementation techniques for the circuitry 420 includes, but is not limited to application-specific integrated circuits (ASIC) 422, field-programmable gate arrays (FPGA) 424, application-specific standard products (ASSP), standard integrated circuits, logic components, and other electronics structures employing custom-made or standard electronic circuits.

Note that in modern computing environments a hybrid implementation employing both the microprocessor technology of FIG. 4A and the custom or standard circuitry of FIG. 4B is feasible.

Functionality of the apparatus 400, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier. The monitoring operations 102, 106 of the wireless data transmissions 280, 282, 294 are performed in connection with the access point 230, such as by the cybersecurity client 252.

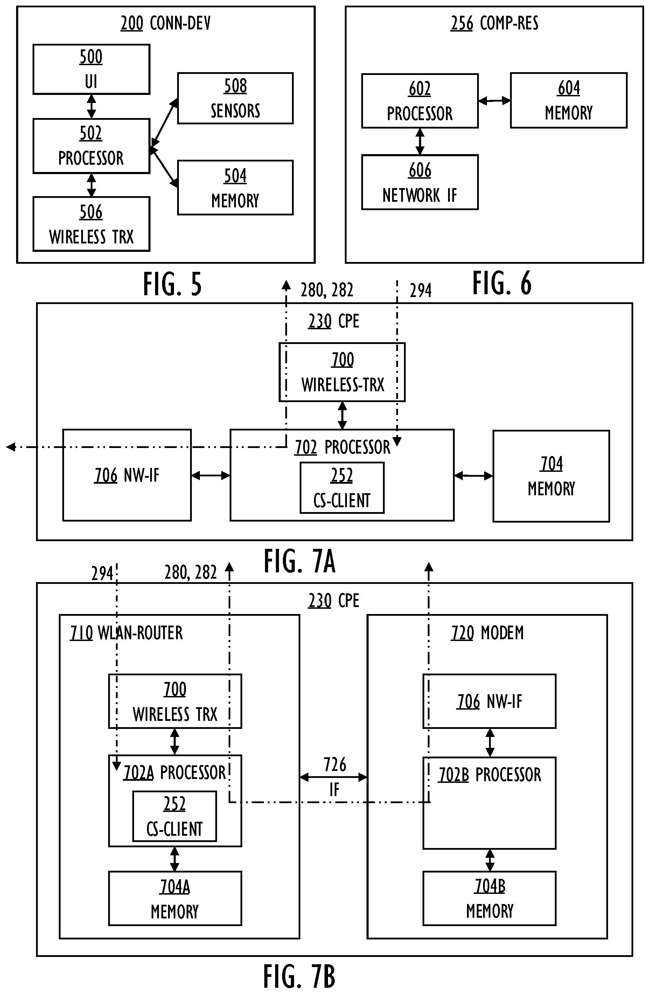

FIG. 5 is a block diagram illustrating an example of the connected device 200,290. The connected device 200, 290 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200, 290 may be a personal communication device of the user 204, 292. The connected device 200, 290 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 504, and one or more processors 502 coupled to the one or more memories 504 configured to carry out a functionality of the connected device 200. In addition, the connected device 200 comprises a user interface 500 (such as a touch screen or one or more light-emitting diodes (LED)), and one or more wireless transceivers 506 (such as a WLAN transceiver, a cellular radio network transceiver, and a short-range radio transceiver), and also one or more sensors 508.

FIG. 6 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 6, the server apparatus 256 comprises one or more memories 604, and one or more processors 602 coupled to the one or more memories 604 configured to carry out the functionality of the cybersecurity server 254. In addition, the server apparatus 256 comprises a network interface (such as an Ethernet network interface card) 606 configured to couple the server apparatus 256 to the Internet 224.

FIG. 7A and FIG. 7B are block diagrams illustrating examples of the CPE 230. The access point 230 may comprise similar structures and functions.

The CPE 230 is located at home or office of a user 204 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 204 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the LAN 222 to provide access for the connected device 200. Furthermore, the 4G/5G CPE 230 performs the conversion between the 4G/5G cellular radio network signal and the Wi-Fi^{®} or wired signal.

In FIG. 7A, the CPE 230 is an integrated apparatus comprising one or more memories 704, and one or more processors 702 coupled to the one or more memories 704 configured to carry out a part of the method/algorithm in some examples. Additionally, the CPE 230 comprises a wireless radio transceiver 700 configured to create the LAN 222 for enabling access by the connected device 200. The CPE 230 also comprises a network interface 706 to act as a modem configured to connect to the telecommunication circuit of the carrier at the demarcation point, i.e., to the WAN 224. The network interface 706 may operate as a Digital Subscriber Line (DSL) modem using different variants such as Very high bitrate DSL (VDSL), Symmetric DSL (SDSL), or Asymmetric DSL (ADSL). The network interface 706 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. The CPE 230 may be running the cybersecurity client 252.

In FIG. 7B, the CPE 230 is a two-part apparatus. A WLAN router part 710 comprises the one or more memories 704A, the one or more processors 702A coupled to the one or more memories 704A configured to carry out the method/algorithm, and the wireless transceiver 700 to create the WLAN 222 for enabling access by the connected device 200. A modem part 720 comprises the one or more processors 702B coupled to one or more memories 704B configured to carry out modem operations, and the network interface 706 to act as the modem configured to connect to the WAN 224. The WLAN router part 710 may be purchased by the user 204 of the connected device 200 to gain access to a part of the method/algorithm, whereas the modem part 720 may be provided by a carrier providing the telecommunication circuit access. As shown in FIG. 7B, the WLAN router part 710 and the modem part 720 may be communicatively coupled by an interface 726 (such as a wired Ethernet interface). As shown in FIG. 7B, the platform may be provided by the one or more memories 704A, and the one or more processors 702A, but also additionally, or alternatively, by the one or more memories 704B, and the one or more processors 702B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org. Still another alternative implementation environment is provided by the prpl Foundation. At the time of writing of this patent application, more information regarding the prpl Foundation may be found in prplfoundation.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may carry out the method/algorithm in a stand-alone fashion, or carry out a part of the method/algorithm functionality augmented by the cybersecurity server 254 to provide the remaining method/algorithm functionality. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
generating (116) a first radio frequency fingerprint based on a first communication protocol data transmission to an access point;
generating (122) a second radio frequency fingerprint based on a second communication protocol data transmission, wherein the second communication protocol data transmission uses a different communication protocol than the first communication protocol data transmission; and
in response to finding (132) a match between the first radio frequency fingerprint and the second radio frequency fingerprint, detecting (136) a single connected device as a transmitter of both the first communication protocol data transmission and the second communication protocol data transmission.

2. The method of claim 1, further comprising:
prior to generating (116) the first radio frequency fingerprint based on the first communication protocol data transmission to the access point, monitoring (102) the first communication protocol data transmission in a wireless local area network of the access point.

3. The method of any preceding claim, further comprising:
prior to generating (122) the second radio frequency fingerprint based on the second communication protocol data transmission, monitoring (106) the second communication protocol data transmission by an access point.

4. The method of claim 3, wherein the second communication protocol data transmission is addressed (110) to another connected device located within a range of the access point.

5. The method of claim 3, wherein the second communication protocol data transmission is addressed (108) to the access point.

6. The method of any preceding claim, wherein the first radio frequency fingerprint is based on one or more physical layer attributes (130) of the first communication protocol data transmission, and the second radio frequency fingerprint is based on one or more physical layer attributes (130) of the second communication protocol data transmission.

7. The method of claim 6, wherein the one or more physical layer attributes (130) ) of the first communication protocol data transmission and the one or more physical layer attributes (130) of the second communication protocol data transmission comprise one or more of a channel state information, a carrier frequency offset, a received signal strength indicator, and in-phase and quadrature components.

8. The method of any preceding claim, wherein the first communication protocol data transmission and the second communication protocol data transmission originate from same radio frequency and digital signal processing components (128) of the single connected device.

9. The method of claim 8, wherein the same radio frequency and digital signal processing components (128) of the single connected device comprise a wireless transceiver chip.

10. The method of claim 7 or 8, wherein the same radio frequency and digital signal processing components (128) of the single connected device comprise one or more of a local oscillator, one or more filters, and an antenna.

11. The method of any preceding claim, wherein generating (116) the first radio frequency fingerprint based on the first communication protocol data transmission to the access point is performed by a first radio frequency fingerprinting process (118) of a first device identification process (120), and wherein generating (122) the second radio frequency fingerprint based on the second communication protocol data transmission is performed by a second radio frequency fingerprinting process (124) of a second device identification process (126), and wherein finding (132) the match between the first radio frequency fingerprint and the second radio frequency fingerprint further comprises:
detecting (134) that a first connected device identified by the first radio frequency fingerprint of the first device identification process (120) is a same connected device as a second connected device identified by the second radio frequency fingerprint of the second device identification process (126).

12. The method of any preceding claim, wherein the first communication protocol data transmission uses a Wi-Fi protocol (104), and the second communication protocol data transmission uses an Apple wireless direct link protocol (112).

13. The method of any preceding claim, wherein the first communication protocol data transmission and the second communication protocol data transmission are selected from a group (114) comprising an Apple wireless direct link protocol, a Wi-Fi protocol, a Bluetooth protocol, a Thread protocol, a Wi-Fi Direct protocol, an Institute of Electrical And Electronics Engineers, IEEE, 802.15.4 protocol, and another wireless communications protocol.

14. The method of any preceding claim, further comprising:
performing (138) a cybersecurity operation related to the single connected device.

15. An apparatus comprising means for carrying out the method of any preceding claim 1-14.

16. A computer program product comprising instructions which, when executed by an apparatus, cause the apparatus to carry out the method of any preceding claim 1-14.

17. A computer-readable medium comprising a computer program with instructions which, when executed by an apparatus, cause the apparatus to carry out the method of any preceding claim 1-14.
